# FASCICULE DE BREVET EUROPEEN

(11) **EP 0 945 481 B1**
(45) Date de publication et mention de la délivrance du brevet: **14.07.2004**
(21) Numéro de dépôt: 99200788.0
(22) Date de dépôt: 10.03.1999
(51) Int. Cl.: C08J 11/08, B01D 17/00

(54) **Procédé de recyclage d'articles à base de polymères du chlorure de vinyle**
Verfahren zur Wiederverwendung von Gegenständen aus Polyvinylchlorid
Process for recycling polyvinyl chloride articles

(30) Priorité: 26.03.1998 FR 9803884; 29.10.1998 FR 9813626
(43) Date de publication de la demande: 29.09.1999
(73) Titulaire: SOLVAY (Société Anonyme), 1050 Bruxelles (BE)
(72) Inventeur: Vandenhende, Bernard, 2811 Leest (BE); Yernaux, Jean-Marie, 1330 Rixensart (BE); Scheffer, Jacques, 69390 Charly (FR)
(74) Mandataire: Jacques, Philippe

(56) Documents cités:
- CA-A- 617 788
- US-A- 3 624 009
- PATENT ABSTRACTS OF JAPAN vol. 017, no. 478, 31 août 1993 (1993-08-31) & JP 05 117198 A (OOGAKI KASEI KOGYO KK)
- CHEMICAL ABSTRACTS, vol. 88, no. 14, 3 avril 1978 (1978-04-03) Columbus, Ohio, US; abstract no. 88090637, XP002084486

## Description

La présente invention concerne un procédé pour le recyclage d'articles, et en particulier de feuilles, à base de polymères du chlorure de vinyle.

Les polymères de chlorure de vinyle, et en particulier le polychlorure de vinyle (PVC), sont abondamment utilisés pour la fabrication d'articles variés. Ils sont par exemple utilisés pour la fabrication de feuilles - généralement armées de fibres de renforcement - destinées au bâchage de véhicules, à la dissimulation de bâtiments en travaux, à la réalisation de décors pour spectacles ou à des fins publicitaires. Ces feuilles présentent généralement une surface importante. En outre, dans de nombreuses applications, surtout dans les applications publicitaires ou de décors de spectacles, qui sont actuellement en pleine expansion, leur durée de service est peu élevée, typiquement de quelques semaines ou mois. Pour ces raisons, des quantités élevées de telles feuilles sont mises au rebut chaque année. Leur recyclage constitue dès lors un problème écologique et économique important.

Il en va de même en ce qui concerne d'autres articles à base de polymère(s) du chlorure de vinyle, souples ou rigides, par exemple en ce qui concerne des bandes transporteuses, des tissus enduits et autres éléments pour l'habillage intérieur de véhicules, des tuyaux, des châssis de fenêtres ou des câbles électriques à isolation polymérique.

Un broyage poussé de ces articles conduirait le plus souvent à un mélange de fines particules de composition hétérogène, dont la purification et la réutilisation seraient difficiles. En outre, dans le cas d'articles renforcés par des fibres (par exemple de polyester), les fibres forment souvent une sorte d'ouate qui complique fortement la réutilisation des broyats.

Différents procédés basés sur une dissolution au moyen de solvants organiques ont déjà été proposés ; toutefois, ils posent souvent des problèmes de sécurité et de pollution. En outre, ils ne permettent pas toujours de recueillir des matières plastiques d'une pureté suffisante pour en permettre une réutilisation économiquement intéressante. Un autre inconvénient de ces méthodes est qu'elles provoquent généralement une extraction des additifs (p.ex. des plastifiants) contenus dans les polymères du chlorure de vinyle, ce qui s'oppose à une réutilisation directe de ceux-ci. Enfin, ces procédés connus conduisent à l'obtention de très fines particules de polymère (de l'ordre du micron), qui sont difficiles à filtrer et à remettre en oeuvre.

Dès lors, la présente invention vise à fournir un procédé de recyclage qui soit simple, économique, sûr, peu polluant, et qui permette de recueillir des matières plastiques d'une pureté élevée et de morphologie avantageuse, en évitant substantiellement d'en extraire les éventuels additifs.

Plus précisément, la présente invention concerne un procédé de recyclage d'un article à base d'au moins un polymère du chlorure de vinyle, selon lequel :
(a) l'article est déchiqueté en fragments d'une dimension moyenne de 1 cm à 50 cm au cas où il excéderait ces dimensions ;
(b) les fragments d'article, secs, sont mis en contact avec un solvant capable de dissoudre le polymère du chlorure de vinyle, substantiellement anhydre, susceptible de former avec l'eau un azéotrope, la quantité d'article n'excédant pas 200 g par litre de solvant;
(c) on provoque la précipitation du polymère dissous dans le solvant par injection de vapeur d'eau dans la solution ainsi obtenue, ce qui provoque en outre l'entraînement de l'azéotrope solvant-eau et laisse ainsi subsister un mélange essentiellement constitué d'eau et de particules solides de polymère ;
(d) on recueille les particules de polymère.

Les articles en question peuvent être de toute nature, pour autant qu'ils soient essentiellement constitués d'un ou plusieurs polymères du chlorure de vinyle (VC). Par polymère du VC, on entend désigner tout homo- ou copolymère contenant au moins 50 % en poids de VC. On utilise généralement du polychlorure de vinyle (PVC), c'est-à-dire un homopolymère. Outre un ou plusieurs polymères du VC, les articles peuvent également comprendre un ou plusieurs additifs usuels tels que par exemple plastifiants, stabilisants, antioxydants, agents ignifugeants, pigments, matières de charge, etc., y compris des fibres de renforcement, par exemple des fibres de verre ou d'une matière plastique appropriée telle qu'un polyester.

Les articles peuvent se présenter sous une forme quelconque, par exemple sous la forme de tuyaux souples ou rigides, de récipients, de feuilles pour le revêtement des sols, de bâches, de châssis de fenêtres, de gaines d'isolation de câbles électriques, etc. Ils peuvent avoir été fabriqués par toute technique connue : extrusion, enduction, injection, etc.

Par feuille, on entend désigner tout article mince, souple ou rigide, monocouche ou multicouche, renforcé ou non par des fibres de renforcement noyées dans la matière plastique. Ces feuilles ont une épaisseur quelconque, généralement inférieure toutefois à 10 mm ; leur épaisseur est le plus souvent comprise entre 0,1 et 5 mm. Le procédé est particulièrement intéressant pour le recyclage de bâches, c'est-à-dire de feuilles renforcées par des fibres, destinées notamment au bâchage de véhicules, à la dissimulation de bâtiments en travaux, à la réalisation de décors pour spectacles ou à des fins publicitaires. Les feuilles peuvent avoir été fabriquées par une technique quelconque, par exemple par calandrage ou par enduction ; on fabrique souvent les feuilles renforcées par enduction d'une trame de fibres au moyen d'un plastisol et chauffage.

Les articles ne doivent pas forcément se présenter sous la forme d'objets présentant une forme bien définie ; le procédé s'applique également à des articles à l'état liquide ou pâteux, notamment à des boues recueillies lors du nettoyage d'installations utilisées pour la fabrications d'articles à partir de plastisols vinyliques. Outre un ou plusieurs polymères du chlorure de vinyle, ces articles à l'état liquide ou pâteux peuvent également comprendre un ou plusieurs solvants, par exemple du white spirit.

Les éventuelles fibres de renforcement peuvent être de toute nature, naturelles ou synthétiques ; on peut notamment utiliser des fibres de verre, de cellulose ou de matière plastique. Il s'agit souvent de fibres de matière plastique, et en particulier de fibres de polyester. Le polyéthylène-téréphtalate (PET) donne de bons résultats, notamment, pour le renforcement de feuilles utilisées comme bâches. Le diamètre des fibres est habituellement de l'ordre de 10 à 100 µm. Il s'agit souvent de fibres longues, dont la longueur peut atteindre plusieurs mètres. Il peut toutefois également s'agir de fibres plus courtes, de quelques millimètres à quelques centimètres de longueur, formant éventuellement un tissu, un non-tissé ou un feutre. A titre illustratif, les fibres peuvent représenter de 1 à 40 % du poids d'une feuille renforcée.

La première étape (a) du procédé selon l'invention consiste, si nécessaire, à déchiqueter les articles de manière à les réduire en fragments de taille réduite, aisés à manipuler. La dimension moyenne de ces fragments est de préférence d'au moins 2 cm. Par ailleurs, elle est avantageusement d'au plus 30 cm. Il est clair que si l'article se présente déjà sous la forme de fragments de dimensions appropriées, l'étape de déchiquetage est superflue.

Un déchiquetage au moyen de dispositifs classiques tels que des broyeurs lents à deux arbres dépourvus de grille ou des broyeurs rapides à couteaux (vitesse supérieure à environ 400 tr/min) ne donne généralement pas d'excellents résultats, car ces dispositifs transforment souvent les éventuelles fibres de renforcement en une sorte d'ouate, difficilement réutilisable et/ou perturbant le fonctionnement du dispositif de déchiquetage.

On utilise dès lors, dans le cadre de la présente invention, un broyeur lent à grille, capable de déchiqueter des feuilles renforcées telles que décrites ci-dessus sans provoquer d'échauffement excessif, et qui, en ce qui concerne les éventuelles fibres de renforcement, évite la formation d'ouate en assurant leur fragmentation, d'une manière telle que la longueur moyenne des morceaux de fibres soit cependant d'au moins 5 mm.

Il s'est révélé avantageux d'utiliser un dispositif de déchiquetage comprenant deux arbres rotatifs munis de couteaux, partiellement imbriqués, tournant au-dessus et à faible distance d'une grille (dont la partie centrale ait approximativement la forme d'un double secteur de cylindre) munie de perforations d'une dimension moyenne de l'ordre de 1 à 10 cm (par exemple de forme ronde). Ces arbres dits principaux tournent en sens contraires, de préférence à une vitesse n'excédant pas 100 tr/min. A chacun de ces deux arbres principaux est associé un arbre auxiliaire, également rotatif, porteur de couteaux partiellement imbriqués par rapport aux couteaux de l'arbre principal correspondant. Chaque arbre auxiliaire tourne de préférence dans un sens contraire à celui de l'arbre principal correspondant, à une vitesse n'excédant pas 150 tr/min. Ces arbres auxiliaires sont destinés à éviter que des fragments d'articles ne restent coincés entre les couteaux principaux. Des broyeurs de ce type sont notamment commercialisés par la société Untha.

Les fragments d'articles ainsi obtenus sont ensuite soumis à l'action d'un solvant présentant plusieurs caractéristiques spécifiques. Cette opération peut s'effectuer dans tout dispositif approprié, compte tenu notamment des exigences de sécurité et d'environnement, par exemple dans un réacteur fermé présentant une résistance chimique suffisante. Le milieu réactionnel est de préférence agité. En vue d'éviter que les éventuelles fibres ne s'accrochent sur les moyens d'agitation et ne perturbent leur fonctionnement, une variante avantageuse consiste à effectuer la dissolution dans un récipient dans lequel est disposé un tambour rotatif perforé, tournant à une vitesse modérée (de préférence à moins de 100 tr/min). L'axe du tambour est de préférence approximativement horizontal. Dans le cas où l'article est renforcé par des fibres, un avantage supplémentaire d'un tel dispositif est qu'après avoir extrait la majorité du solvant de ce récipient, on peut mettre le tambour en rotation à vitesse élevée, de façon à "essorer" les fibres qu'il contient. Le récipient dans lequel s'effectue la dissolution et la précipitation sera qualifié de réacteur ci-après.

Le solvant utilisé est une substance - ou un mélange de substances - capable de dissoudre le ou les polymères du chlorure de vinyle que comprend l'article traité. Dans le cas où l'article est renforcé par des fibres, le solvant ne doit cependant pas provoquer la dissolution des fibres de renforcement. De manière surprenante, on a constaté qu'il est extrêmement important que le solvant mis en oeuvre soit substantiellement anhydre, c'est-à-dire qu'il contienne moins de 8 % (en poids) d'eau, sans quoi le pouvoir de dissolution du solvant peut être réduit d'une façon inacceptable. Il en va naturellement de même pour les fragments d'articles à traiter, qui, avant d'être soumis à l'action du solvant, doivent également être substantiellement secs. A cette fin, une étape de séchage peut être avantageusement prévue avant et/ou après le déchiquetage éventuel.

Il est également nécessaire, dans le contexte du procédé selon l'invention, que le solvant utilisé soit miscible avec l'eau, et forme avec l'eau un azéotrope. Le solvant est avantageusement choisi parmi la méthyl-éthyl-cétone (MEK), la méthyl-isobutyl-cétone et le tétrahydrofurane. On préfère utiliser la MEK, qui forme avec l'eau un azéotrope comprenant (sous pression atmosphérique) 11 % d'eau et 89 % de MEK (en poids).

La dissolution (b) s'effectue à une température quelconque, à laquelle il est toutefois évident que le solvant doit être liquide. On préfère opérer à une température comprise entre 20 et 100 °C, de préférence de 50 à 80 °C. Lorsque le solvant est la MEK, de bons résultats ont été obtenus en réalisant la dissolution à une température de 75 °C (± 4 °C). Il est avantageux de travailler sous atmosphère inerte, par exemple sous azote.

La dissolution (étape b) peut s'effectuer sous une pression quelconque. On préfère toutefois la réaliser sous une pression de 2 à 10 bars, de préférence de 2 à 4 bars, de ce qui permet de travailler à des températures plus élevées, de préférence de plus de 110°C (sans provoquer l'ébullition du solvant), et ainsi d'accélérer la dissolution, ce qui permet de recycler, par heure, la même quantité d'articles en utilisant un (ou plusieurs) réacteur(s) de volume plus faible. Un avantage extrêmement important et surprenant de cette variante du procédé de l'invention est que le fait de travailler sous pression permet en outre d'assouplir les exigences relatives à la quantité d'eau autorisée lors de la dissolution ; ainsi, en travaillant sous une pression de 2,5 à 3 bars et à une température de l'ordre de 115°C, de bons résultats ont été obtenus en utilisant comme solvant de la MEK contenant jusqu'à 8 % en poids d'eau. Ceci est très important étant donné qu'il est ainsi possible de réutiliser le solvant dans le procédé sans devoir le soumettre à une épuration poussée en eau.

La quantité de solvant à utiliser doit être choisie de façon à éviter que l'augmentation de viscosité provoquée par la dissolution du polymère ne perturbe le bon déroulement du procédé (filtration). Lors de l'étape de dissolution (b), la quantité d'article n'excède pas 200 g par litre de solvant, et en particulier 100 g/l.

Dans la perspective d'une nouvelle mise en oeuvre du polymère du chlorure de vinyle ainsi recueilli, une variante avantageuse du procédé selon l'invention consiste à incorporer au solvant, avant ou pendant l'étape de dissolution du polymère, un ou plusieurs additifs (stabilisants, plastifiants, etc.), dont les natures et les quantités soient adaptées aux propriétés que l'on souhaite conférer au polymère recyclé. Il est souhaitable, dans ce cas, que le ou les additifs ainsi incorporés soient solubles dans le solvant utilisé. D'éventuels additifs insolubles peuvent cependant être dispersés finement dans le solvant.

A l'issue de l'étape de dissolution (b), on dispose d'un mélange comprenant d'une part une phase liquide constituée du solvant dans lequel est dissous le polymère, et d'autre part les éventuels constituants non-dissous, par exemple des fibres de renforcement. La séparation de tels constituants de la phase liquide peut par exemple se faire par filtration au moyen d'un tissu ou tamis dont les ouvertures présentent des dimensions de l'ordre de 0.1 à 10 mm.

Dans les cas où l'article est renforcé par des fibres, on constate que les fibres ainsi récupérées sont d'une grande pureté. Afin d'accroître cette pureté, les fibres peuvent éventuellement être soumises à une étape ultérieure de centrifugation et/ou de lavage, par exemple au moyen du même solvant, en vue d'éliminer d'éventuelles traces résiduelles de polymère. Le solvant qui aurait été utilisé pour ce lavage peut avantageusement être mélangé au solvant frais utilisé pour l'étape de dissolution; le fait qu'il contienne des traces de polymère dissous n'est pas préjudiciable à l'efficacité de la dissolution. Les fibres peuvent être réutilisées directement pour la fabrication d'articles renforcés à base de matière plastique.

Outre d'éventuelles fibres, cette éventuelle étape de séparation permet également de recueillir d'éventuels "accessoires" tels qu'oeillets métalliques, étiquettes, etc. incorporés dans l'article et qui n'en auraient pas été enlevés avant qu'il ne soit soumis au procédé selon l'invention. De même, on peut ainsi éliminer d'éventuels morceaux de conducteurs métalliques qui seraient restés dans des gaines de câbles électriques. Si nécessaire, le solvant contenant le polymère dissous peut être filtré plus finement en vue d'en éliminer d'éventuelles poussières ou autres particules insolubles, par exemple en utilisant un tissu ou tamis dont les ouvertures présentent des dimensions inférieures à 200 µm, de préférence inférieures à 20 µm.

Dès lors, la présente invention concerne en particulier un procédé tel que décrit ci-dessus, dans lequel l'article est renforcé par des fibres de renforcement, le solvant est tel que les fibres y soient substantiellement insolubles, et, avant de provoquer la précipitation du polymère dissous, on sépare les fibres du solvant contenant le polymère dissous.

Dans le solvant contenant le polymère dissous, on injecte alors de la vapeur d'eau, en une quantité suffisante pour provoquer la précipitation du polymère dissous (étape c). On ajoute de préférence un large excès d'eau par rapport à la composition azéotropique. Par exemple, dans le cas de la MEK, on ajoute généralement de 1 à 3 kg d'eau par kg de MEK. Cette injection de vapeur d'eau provoque la précipitation du polymère du chlorure de vinyle sous forme de particules solides (encore substantiellement exemptes d'additifs à ce stade-ci), dont les dimensions moyennes sont de l'ordre du micron.

L'injection de vapeur d'eau a également pour effet de provoquer l'évaporation et l'entraînement de l'azéotrope eau-solvant, sous forme gazeuse, hors du réacteur contenant la solution. Cet azéotrope peut ensuite être recueilli et condensé. Le mélange qui subsiste (qui n'a pas été évaporé) est essentiellement constitué d'eau et de particules solides de polymère. Tant que la solution contient encore du solvant, la température de la phase gazeuse surmontant la solution reste approximativement égale à la température d'ébullition de l'azéotrope (à titre d'exemple, la température d'évaporation de l'azéotrope MEK-eau est d'environ 73,5 °C sous pression atmosphérique).

Dès que la concentration de solvant dans la solution devient suffisamment faible, les additifs dissous dans la solution se déposent sur les particules de polymère, ce qui, de manière très avantageuse, favorise leur agglomération en grains (agglomérats) de l'ordre de 500 µm, qu'il sera très aisé de filtrer, de manipuler et de remettre en oeuvre par la suite (contrairement à des particules de l'ordre du micron). De manière surprenante, on a constaté que ces grains (agglomérats) de polymère présentent une morphologie extrêmement satisfaisante, et en particulier une granulométrie très peu dispersée.

Lorsque la quasi-totalité du solvant a été entraîné, la température de la phase gazeuse remonte jusqu'à environ 100°C (sous pression atmosphérique), ce qui constitue un moyen aisé de détecter l'élimination quasi-complète du solvant. Cette détection peut également se baser sur la constatation que la température de la solution (phase liquide) se rapproche de 100°C (sous pression atmosphérique) au fur et à mesure que la proportion de solvant s'y réduit.

Une fois que la solution est substantiellement exempte de solvant, il est toutefois avantageux de maintenir sa température à environ 100°C (par exemple en poursuivant l'injection de vapeur) pendant encore au moins 5 minutes, et de préférence pendant au moins 10 minutes, ce qui, de manière surprenante, a une influence très favorable sur les propriétés et la morphologie des particules (agglomérées) de polymère (dureté, granulométrie, densité apparente, porosité, ...).

Un avantage très important de l'élimination du solvant (plus précisément de l'azéotrope eau-solvant) au moyen de vapeur d'eau est que la majorité des éventuels additifs présents dans le polymère traité ne sont pas entraînés avec le solvant, et se redéposent sur les particules de polymère Par conséquent, les particules de polymère recueillies à l'issue du procédé contiennent encore une fraction importante des additifs que contenait initialement le polymère (du moins ceux de ces additifs qui sont solubles dans le solvant; ceci ne concerne généralement pas les éventuelles matières de charge, par exemple). Cette situation est particulièrement avantageuse étant donné que ces additifs sont souvent d'un coût élevé, et qu'en outre lesdites particules peuvent ainsi être réutilisées directement dans un procédé de fabrication d'articles à base de ce polymère. Cette réutilisation est facilitée par le fait que les particules ainsi récupérées sont prégélifiées, ce qui simplifie la mise en oeuvre par comparaison avec la mise en oeuvre d'un mélange hétérogène de granules de polymère et d'additifs ajoutés séparément. Les procédés connus de recyclage par dissolution-précipitation ne présentent pas cet avantage, vu qu'ils provoquent l'extraction de la majorité des additifs du polymère.

Un avantage complémentaire de l'injection de vapeur d'eau est qu'elle rend généralement superflu un chauffage extérieur du réacteur où se déroule le procédé. Cet avantage est très important sur le plan industriel : en effet, un chauffage extérieur (par l'intermédiaire de la paroi du réacteur) provoquerait des incrustations de polymère sur la paroi dudit réacteur (croûtage), nécessitant son nettoyage fréquent. Au contraire, dans le procédé de l'invention, l'injection de vapeur permet à la paroi de se trouver à une température plus faible, ce qui réduit fortement les risques de croûtage.

Un autre avantage du procédé de l'invention est que les éventuels émulsifiants que contenait le polymère traité passent en solution dans l'eau, et que les particules de polymère recueillies à l'issue du recyclage sont dès lors substantiellement exemptes d'émulsifiants, ce qui en facilite la mise en oeuvre ; en particulier, on évite des dépôts sur les installations de mise en oeuvre, ainsi que le formation de bulles à la surface des nouveaux produits ainsi obtenus.

Les particules (agglomérées) de polymère peuvent alors être aisément recueillies (étape d), par exemple par filtration du mélange eau-particules, et éventuellement séchées avant d'être stockées ou réutilisées.

Etant donné le coût du solvant et les inconvénients que son rejet dans l'environnement pourrait présenter, il est souhaitable de traiter la fraction azéotropique afin d'en récupérer le solvant.

Selon une variante préférée, on traite 1' azéotrope recueilli lors de l'étape (c) - dans un récipient distinct du réacteur de dissolution et de précipitation - en lui ajoutant un agent de séparation provoquant sa décantation en une phase aqueuse et une phase essentiellement constituée de solvant. (Il va de soi que 1' azéotrope doit se trouver à l'état liquide avant d'être soumise à cette décantation. Une étape de condensation peut être prévue à cette fin.) L'agent de séparation est de préférence soluble dans l'eau. L'agent de séparation est avantageusement un sel insoluble dans le solvant. On peut notamment utiliser du chlorure de sodium (NaCl) ou du chlorure de calcium (CaCl₂), ce dernier étant préféré. Ce choix donne en particulier de bons résultats lorsque le solvant est la MEK L'agent de séparation peut être mis en oeuvre à l'état solide ou en solution aqueuse. Cette dernière possibilité est particulièrement intéressante dans la mesure où, à la suite de cette séparation, la phase aqueuse contient cet agent dissous ; elle peut ainsi être directement réutilisée (après une reconcentration éventuelle, par exemple par évaporation d'eau) comme agent de séparation, en boucle fermée.

Des quantités élevées d'agent de séparation sont recommandées en vue de réduire autant que possible la quantité d'eau résiduelle présente en mélange dans le solvant ainsi recueilli (comme exposé précédemment, le solvant utilisé lors de l'étape de dissolution doit être substantiellement anhydre). Par exemple, dans le cas de la séparation d'un mélange azéotropique MEK-eau au moyen de CaCl₂, des quantités de plus de 20 g de CaCl₂ par 100 g d'eau se sont révélées nécessaires pour réduire à moins de 10 % (en poids) la teneur en azéotrope résiduel dans la fraction de MEK séparée après une heure de décantation (à une température de 20 à 60 °C). Cette réduction est importante dans la perspective d'une réutilisation du solvant dans le procédé selon l'invention, étant donné que le solvant utilisé pour la dissolution du polymère doit être substantiellement anhydre.

Lorsque le solvant est la MEK, on peut également utiliser, comme autre agent de séparation, du 1-propanol. Si cette variante est retenue, le mode opératoire préféré consiste à injecter le solvant contenant le polymère dissous dans le propanol, de préférence à chaud, à provoquer l'évaporation du solvant, avec entraînement d'une grande partie du 1-propanol, et à ensuite filtrer et sécher les particules de polymère formées. Le propanol peut être séparé du solvant, par exemple par distillation, et réutilisé.

Le procédé selon l'invention peut être effectué de manière continue ou discontinue (batch), cette dernière variante étant préférée.

Un avantage important dudit procédé est qu'il peut fonctionner en boucle fermée, sans générer de rejets polluants, étant donné qu'aussi bien le solvant que l'éventuel agent de séparation du mélange solvant-eau peuvent être recyclés et réutilisés dans le procédé.

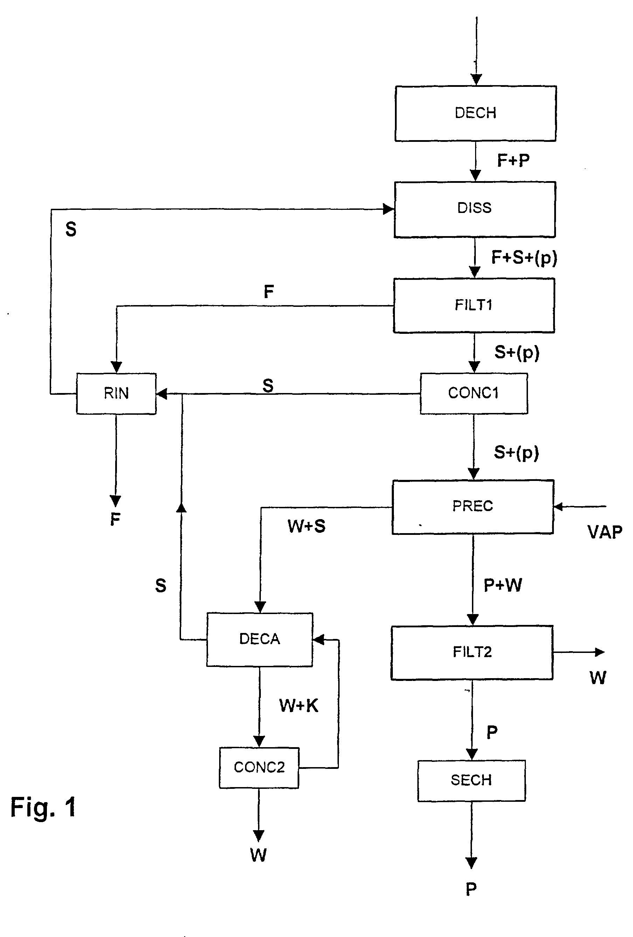

### DESCRIPTION DE LA FIGURE

La figure annexée illustre schématiquement, de façon non limitative, le déroulement d'une variante particulière du procédé selon l'invention, appliquée au recyclage de bâches de PVC renforcées de fibres de polyester.

Les symboles utilisés ont les significations suivantes :

| | | | |
|---|---|---|---|
| P | polymère solide | F | fibres |
| S | solvant | (p) | polymère dissous |
| W | eau | K | agent de séparation. |

Les bâches sont tout d'abord déchiquetées (DECH) (étape a), puis le polymère qu'elles comprennent est dissous (DISS) (étape b) sous l'effet du solvant S, dans lequel peuvent éventuellement avoir été dissous certains additifs que l'on souhaite incorporer au polymère. Le mélange ainsi obtenu est alors filtré (FILT1), ce qui permet de séparer les fibres F d'une solution du polymère dans le solvant (S+(p)). Les fibres sont rincées (RIN) au moyen de solvant S, et peuvent ensuite être essorées, séchées et stockées ou réutilisées (étapes non-représentées). Après une reconcentration (CONC1) de la solution S+(p), on provoque la précipitation du polymère (PREC) (étape c) en injectant de la vapeur d'eau (VAP) dans cette solution, ce qui provoque également l'élimination de l'azéotrope solvant-eau par entraînement. Les particules solides de polymère P (agglomérats) sont séparées par filtration (FILT2) (étape d) de l'eau W, qui peut être réutilisée en PREC, puis séchées (SECH). L'azéotrope W+S, après avoir été condensé (étape non-représentée), est séparé par décantation (DECA) sous l'effet d'un agent de séparation K en solution dans de l'eau, ce qui fournit d'une part une fraction de solvant S, qui peut être réutilisée, et d'autre part une phase aqueuse contenant l'agent de décantation (W+K), qui peut également être réutilisée, éventuellement après reconcentration (CONC2). L'eau recueillie lors de cette reconcentration peut être éliminée, ou réutilisée par exemple (sous forme de vapeur) pour la précipitation du polymère (PREC).

Le solvant recueilli lors de la reconcentration éventuelle de la solution (CONC1) ainsi que celui recueilli par séparation de l'azéotrope (DECA) peuvent être réutilisés dans l'étape de dissolution du polymère (DISS), soit directement, soit (comme illustré) indirectement, après avoir servi au rinçage (RIN) des fibres F.

## Revendications

1. Procédé de recyclage d'un article à base d'au moins un polymère du chlorure de vinyle, selon lequel :
(a) l'article est déchiqueté en fragments d'une dimension moyenne de 1 cm à 50 cm au cas où il excéderait ces dimensions ;
(b) les fragments d'article, secs, sont mis en contact avec un solvant capable de dissoudre le polymère du chlorure de vinyle, substantiellement anhydre, susceptible de former avec l'eau un azéotrope, la quantité d'article n'excédant pas 200 g par litre de solvant;
(c) on provoque la précipitation du polymère dissous dans le solvant par injection de vapeur d'eau dans la solution ainsi obtenue, ce qui provoque en outre l'entraînement de l'azéotrope solvant-eau et laisse ainsi subsister un mélange essentiellement constitué d'eau et de particules solides de polymère,
(d) on recueille les particules de polymère.

2. Procédé selon la revendication 1, dans lequel l'étape de dissolution (b) est effectuée dans un récipient dans lequel est disposé un tambour rotatif perforé.

3. Procédé selon l'une des revendications précédentes, dans lequel le solvant est choisi parmi la méthyl-éthyl-cétone (MEK), la méthyl-isobutyl-cétone et le tétrahydrofurane.

4. Procédé selon l'une des revendications précédentes, dans lequel l'étape de dissolution (b) s'effectue sous une pression de 2 à 10 bars.

5. Procédé selon l'une des revendications précédentes, dans lequel l'article est renforcé par des fibres de renforcement, le solvant est tel que les fibres y soient substantiellement insolubles, et, avant de provoquer la précipitation du polymère dissous, on sépare les fibres du solvant contenant le polymère dissous.

6. Procédé selon l'une des revendications précédentes, dans lequel le mélange d'eau et de particules de polymère est chauffé en vue de réduire les traces de solvant dont serait encore imprégné le polymère et d'améliorer sa morphologie, avant de recueillir ce dernier (d).

7. Procédé selon l'une des revendications précédentes, dans lequel on traite l'azéotrope recueilli lors de l'étape (c) en lui ajoutant un agent de séparation provoquant sa décantation en une phase aqueuse et une phase essentiellement constituée de solvant.

8. Procédé selon la revendication précédente, dans lequel l'agent de séparation est un sel insoluble dans le solvant.

9. Procédé selon l'une des revendications précédentes, dans lequel l'article est une feuille.

## Patentansprüche

1. Verfahren zur Recyclierung eines Gegenstandes auf der Basis wenigstens eines Vinylchloridpolymers, wonach
(a) der Gegenstand zu Stücken mit einer mittleren Abmessung von 1 cm bis 50 cm, falls er diese Abmessungen überschreitet, zerkleinert wird;
(b) die trockenen Stücke des Gegenstandes mit einem im wesentlichen wasserfreien, zur Bildung eines Azeotrops mit Wasser geeigneten Lösungsmittel, das zur Auflösung des Vinylchloridpolymers befähigt ist, in Kontakt gebracht werden, wobei die Menge des Gegenstandes 200 g/l Lösungsmittel nicht überschreitet;
(c) durch Einspritzen von Wasserdampf in die so erhaltene Lösung die Ausfällung des im Lösungsmittel aufgelösten Polymers hervorgerufen wird, wodurch überdies das Azeotrop Lösungsmittel-Wasser mitgeführt wird und solcherart ein Gemisch zurückbleibt, das im wesentlichen aus Wasser und festen Teilchen des Polymers besteht,
(d) die Teilchen des Polymers gewonnen werden.

2. Verfahren nach Anspruch 1, worin die Auflösungsstufe (b) in einem Behälter bewirkt wird, in dem eine perforierte Drehtrommel angeordnet ist.

3. Verfahren nach einem der vorstehenden Ansprüche, worin das Lösungsmittel unter Methylethylketon (MEK), Methylisobutylketon und Tetrahydrofuran ausgewählt wird.

4. Verfahren nach einem der vorstehenden Ansprüche, worin die Auflösungsstufe (b) unter einem Druck von 2 bis 10 bar ausgeführt wird.

5. Verfahren nach einem der vorstehenden Ansprüche, worin der Gegenstand durch Verstärkungsfasern verstärkt ist, das Lösungsmittel ein solches ist, daß die Fasern darin im wesentlichen unlöslich sind, und daß vor dem Bewirken der Ausfällung des aufgelösten Polymers die Fasern von dem das aufgelöste Polymer enthaltenden Lösungsmittel abgetrennt werden.

6. Verfahren nach einem der vorstehenden Ansprüche, worin das Gemisch aus Wasser und Polymerteilchen erhitzt wird, um die Spuren an Lösungsmittel zu verringern, mit denen das Polymer noch imprägniert ist und um die Morphologie des Polymers zu verbessern, bevor dieses in Stufe (d) gewonnen wird.

7. Verfahren nach einem der vorstehenden Ansprüche, worin das in Stufe (c) gewonnene Azeotrop behandelt wird, indem ihm ein Trennmittel zugesetzt wird, das seine Dekantation in eine wäßrige Phase und in eine im wesentlichen aus dem Lösungsmittel bestehende Phase hervorruft.

8. Verfahren nach dem vorstehenden Anspruch, worin das Trennmittel ein in dem Lösungsmittel unlösliches Salz ist.

9. Verfahren nach einem der vorstehenden Ansprüche, worin der Gegenstand eine Folie ist.

## Claims

1. Process for recycling an article based on at least one vinyl chloride polymer, in which:
(a) the article is shredded into fragments having an average dimension of 1 cm to 50 cm, should it exceed these dimensions;
(b) the fragments of the article, which are substantially dry, are brought into contact with a substantially anhydrous solvent capable of dissolving the vinyl chloride polymer and susceptible of forming an azeotrope with water, the quantity of the article not exceeding 200 g per liter of solvent.
(c) the polymer dissolved in the solvent is precipitated by injecting steam in the solution thus obtained, which moreover leads to the stripping of the water-solvent azeotrope and so leaves behind a mixture essentially consisting of water and of solid polymer particles;
(d) the polymer particles are recovered.

2. Process according to Claim 1, in which the dissolving step (b) is carried out in a container in which a perforated rotary drum is placed.

3. Process according to one of the preceding claims, in which the solvent is chosen from methyl ethyl ketone (MEK), methyl isobutyl ketone and tetrahydrofuran.

4. Process according to one of the preceding claims, in which the dissolution step (b) is effected at a pressure of 2 to 10 bars.

5. Process according to one of the preceding claims, in which the article is reinforced with reinforcing fibres, the solvent is such that the fibres are substantially insoluble in it and, before the dissolved polymer is precipitated, the fibres are separated from the solvent containing the dissolved polymer.

6. Process according to one of the preceding claims, in which the mixture of water and polymer particles is heated for the purpose of reducing the traces of solvent with which the polymer, before the latter is recovered (d), would still be impregnated.

7. Process according to one of the preceding claims, in which the azeotrope recovered in the step (c) is treated by adding to it a separating agent which causes it to settle into an aqueous phase and a phase essentially consisting of solvent.

8. Process according to the preceding claim, in which the separating agent is a salt insoluble in the solvent.

9. Process according to one of the preceding claims, in which the article is a sheet.
